(19) Europäisches Patentamt
European Patent Office
Office européen des brevets

(11) **EP 2 142 390 B1**

(12) **EUROPEAN PATENT SPECIFICATION**

(45) Date of publication and mention
of the grant of the patent:
**14.01.2015 Bulletin 2015/03**

(21) Application number: **08734880.1**

(22) Date of filing: **28.03.2008**

(51) Int Cl.:
***B60C 23/04*** (2006.01)

(86) International application number:
**PCT/EP2008/002513**

(87) International publication number:
**WO 2008/119523 (09.10.2008 Gazette 2008/41)**

(54) **ADAPTIVE PRESSURE THRESHOLDS IN A TYRE PRESSURE MONITORING SYSTEM**

ADAPTIVE DRUCKGRENZWERTE IN EINEM REIFENDRUCKKONTROLLSYSTEM

SEUILS DE PRESSION ADAPTATIFS DANS UN SYSTÈME DE SURVEILLANCE DE PRESSION DE PNEU

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.03.2007 GB 0706090**

(43) Date of publication of application:
**13.01.2010 Bulletin 2010/02**

(73) Proprietor: **Schrader Electronics Limited
Antrim BT41 1QS (GB)**

(72) Inventor: **PATTISON, Allister
Ballymena,
County Antrim BT43 6NQ (GB)**

(74) Representative: **Wallace, Alan Hutchinson et al
FRKelly
4 Mount Charles
Belfast, Northern Ireland BT7 1NZ (GB)**

(56) References cited:
**EP-A- 1 767 384    DE-A1- 10 360 122
FR-A- 2 884 455**

**Description**

**Field of the Invention**

The present invention relates to tyre pressure monitoring systems and in particular to adaptive pressure thresholds in tyre pressure monitoring systems.

**Background to the Invention**

Tyre pressure monitoring systems (TPMS) are well known. A simple method for monitoring tyre pressure is to monitor the absolute pressure within a tyre and, if it falls below a pressure threshold, to issue a warning. Typically, the pressure threshold is set relative to a nominal, or placard, tyre pressure. For example, it may be desired to issue a warning when tyre pressure drops by, say, 0.3 Bar from the nominal tyre pressure.

A perceived problem with this technique is that it does not accommodate situations where it is desired to increase tyre pressure to cope with heavy loads or high speed driving. It such situations, it may be desired to issue a warning when tyre pressure drops by a predetermined amount, say 0.3 Bar, from the increased tyre pressure. However, this does not happen because the pressure threshold is set relative to the nominal tyre pressure. It would be desirable, therefore, to provide a tyre pressure monitoring system which can accommodate deliberate changes in tyre pressure to cope with varying loads.

German patent application DE 103 60 122 discloses a tyre pressure monitoring system that compares measured tyre pressure against a nominal value. European patent application EP 1 767 384 discloses a temperature compensation method involving estimation of the deviation in temperature of the temperature sensor from mean air temperature in tyres, during current temperature measurement in tyres. French patent application FR 2 884 455 discloses a tyre pressure monitoring system in which a measured pressure value is compared against a time-varying reference value.

**Summary of the Invention**

A first aspect of the invention provides a system for monitoring the pressure of at least one tyre of a wheeled vehicle as claimed in claim 1.

Advantageously, said predetermined amount is commensurate with a deliberate deflation of a tyre by a user. For example, the predetermined amount may take a value between approximately 0.1 and 0.3 bar, preferably approximately 0.2 bar.

Said evaluation period is advantageously commensurate with, or associated with, a deliberate deflation of a tyre by a user. For example, the evaluation period may comprise a time interval between, for example, approximately 1 and 30 seconds. Conveniently, the evaluation period may be determined by one or more sampling periods of the pressure sensor. For example, the time interval may be determined by one sampling period of the pressure sensor. Hence, the system may be arranged to decrease said at least one pressure threshold value in response to determining that said current measured tyre pressure has decreased by more than said predetermined amount between two, preferably successive, pressure measurements taken by the pressure sensor.

In preferred embodiments, said evaluation period comprises a period in respect of which the system determines that the vehicle is stationary. For example, the system may be arranged to decrease said at least one pressure threshold value in response to determining that said current measured tyre pressure has decreased by more than said predetermined amount between a first pressure measurement taken before or during a period in respect of which the system determines that the vehicle is stationary, and a second pressure measurement taken during or after said period in respect of which the system determines that the vehicle is stationary.

In use, when the current tyre pressure falls below said at least one pressure threshold value, one or more respective alarms or other signals or indicators may be activated. Preferred embodiments allow pressure thresholds to be adapted in response to deliberate changes in tyre pressure and so to maintain a desired sensitivity. In particular, the preferred methods and apparatus enable differentiation between a deliberate deflation and a natural leakage and cause thresholds to be adapted in response to the former and not the latter.

Preferably, the apparatus is arranged to increase said at least one pressure threshold value in response to an increase in said current measured tyre pressure value. In preferred embodiments, the system is arranged to increase or decrease, as appropriate, said at least one pressure threshold value in order to maintain a substantially constant differential level between said at least one pressure threshold value and said current measured tyre pressure value. In cases where more than one pressure threshold value is maintained, a respective substantially constant differential level may be provided for each pressure threshold value.

The system may perform adaptation of said at least one pressure threshold value while the vehicle is driving and/or while the ignition is on. It is preferred however, that adaptation is only performed when the vehicle is stationary, or is deemed to have been stationary for a predetermined period of time, and/or in respect of periods when the vehicle is stationary, or is deemed to have been stationary for a predetermined period of time. This allows adaptation to be based on pressure changes that take place over the whole duration of a driving period, the pressure threshold(s) remaining fixed for the duration of each driving period. To this end, the system may include, or be associated with, means for determining whether or not the vehicle is in motion, e.g. the state of the ignition, a roll switch, a vibration sensor, and/or by detecting signal components in the pressure signal that are indicative of a rolling tyre and/or any other conventional means.

Advantageously, the system is arranged to perform temperature compensation of tyre pressure measurements with respect to a reference temperature and based on Boyle's law. The at least one pressure threshold value advantageously varies with the temperature of the fluid within the tyre, conveniently based on Boyle's law.

A second aspect of the invention provides a method of monitoring the pressure of at least one tyre of a wheeled vehicle, the method comprising maintaining at least one tyre pressure threshold value; adapting said at least one pressure threshold value relative to a current measured tyre pressure value when said current measured tyre pressure value exceeds a nominal value; and decreasing said at least one pressure threshold value in response to a decrease in said current measured tyre pressure value which exceeds a predetermined amount within an evaluation period.

A third aspect of the invention provides a computer program product comprising computer program code for causing a computer to perform the method of the second aspect of the invention.

Further advantageous aspects of the invention will become apparent to those ordinarily skilled in the art upon review of the following description of a preferred embodiment and with reference to the accompanying drawings.

**Brief Description of the Drawings**

An embodiment of the invention is now described by way of example and with reference to the accompanying drawings in which:

Figure 1 is a schematic block diagram of a typical tyre pressure monitoring system;

Figure 2 is a graph plotting tyre pressure against tyre temperature and illustrating how pressure thresholds may be adapted to accommodate varying loads;

Figure 3 is a graphical illustration of how pressure thresholds may be maintained or adjusted in response to a decrease and a deliberate increase in tyre pressure;

Figure 4 is a graphical illustration of how pressure thresholds may be maintained or adjusted in response to a natural decrease or a deliberate decrease in tyre pressure; and

Figure 5 is a flow chart illustrating a preferred method of determining when to adjust tyre pressure thresholds.

**Detailed Description of the Drawings**

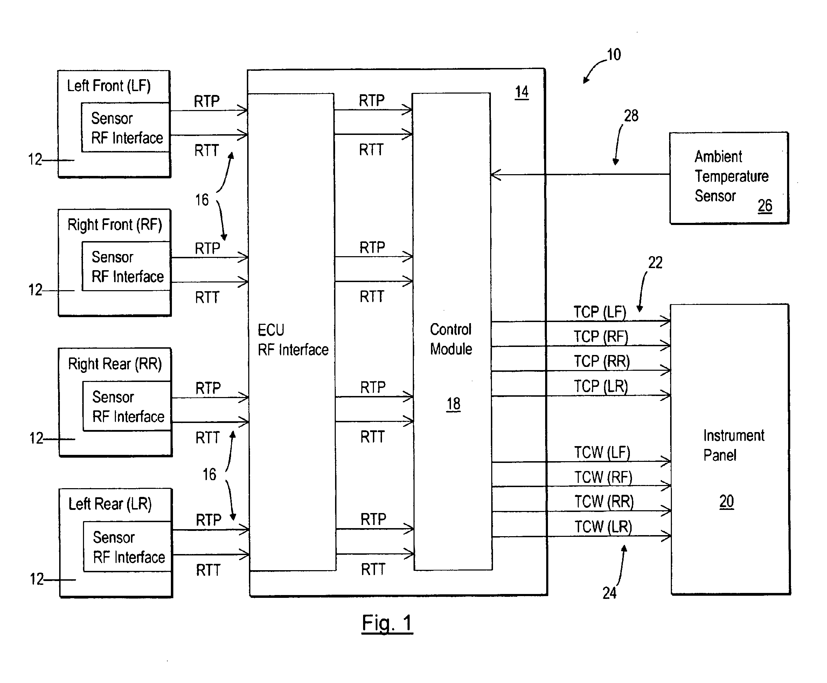

Referring now to Figure 1 of the drawings, there is shown, generally indicated as 10, a typical tyre pressure monitoring system (TPMS) for monitoring the pressure of the fluid, typically air, in a fluid-filled tyre. The TPMS 10 usually comprises a respective sensor unit 12 for each tyre bearing wheel (not shown) of a vehicle (not shown) in which it is installed. In the example of Figure 1, the vehicle is assumed to have four wheels and the sensor units are designated as Left Front (LF), Right Front (RF), Right Rear (RR) and Left Rear (LR) corresponding to the position of the wheel on which they are mounted. Each sensor unit 12 includes an appropriate sensor device (e.g. a piezo-electric pressure sensor (not shown)) for measuring fluid pressure within the respective tyre.

The TPMS 10 includes a receiver unit 14 arranged to receive signals 16 from the sensor units 12 indicating the measured tyre pressure. The sensor units 12 are wheel mounted, while the receiver unit 14 is usually located remotely from the sensors 12 on some other part of the vehicle. Typically, the senor units 12 and receiver 14 communicate wirelessly using for example an RF (radio frequency) link. To this end, in Figure 1 the receiver 14 and each sensor unit 12 has a respective RF transmitter and/or receiver as required.

The receiver 14 includes a control unit 18 comprising a programmable processing device, usually a microprocessor or microcontroller. The control unit 18 analyses the information received from the sensor units 12 and transmits corresponding information to a display unit 20 which is usually provided on the vehicle's instrument panel (not shown). In particular, the control unit 18 may send a respective pressure value signal 22 and, if warranted, a respective pressure warning signal 24 to the display unit 20 for each wheel. The control unit 18 typically performs temperature compensation during its analysis to compensate for the effects of varying temperature of the fluid in the tyre, but this is not described herein for reasons of clarity.

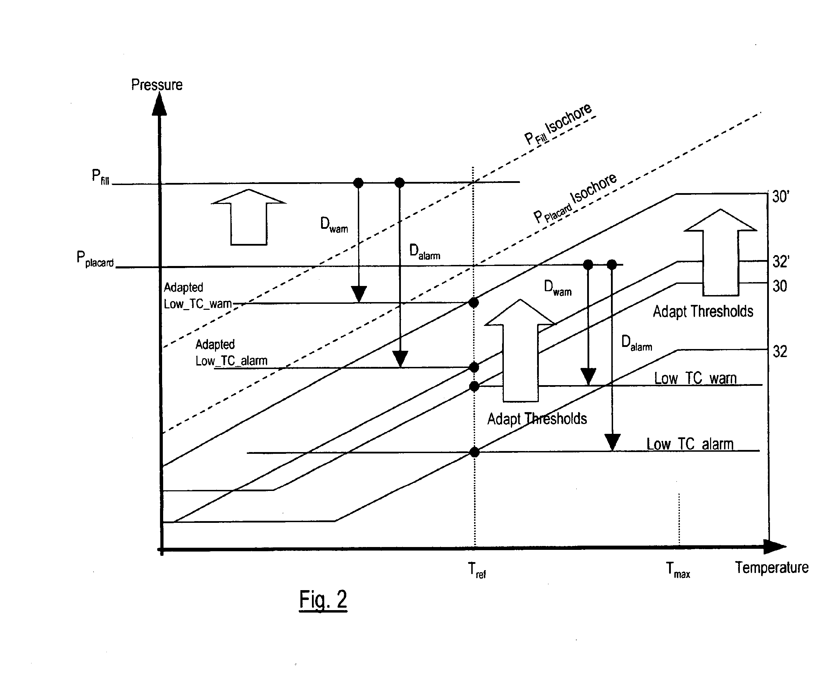

The control unit 18 maintains at least one tyre pressure threshold, which is typically set by a vehicle manufacturer or other user, against which measured, or actual, tyre pressure is assessed. With reference to Figure 2, the TPMS 10 supports two pressure thresholds, namely a warning threshold 30 and an alarm threshold 32. Each pressure threshold 30, 32 advantageously varies with temperature within at least part of the normal temperature operating range of the tyres (i.e. the temperature of the fluid within the tyres). For example, as can be seen from Figure 2, the thresholds 30, 32 vary substantially linearly with temperature around the reference operating temperature $T_{Ref}$ of the tyres.

The thresholds 30, 32 are normally defined relative to a nominal, or placard, pressure $P_{Placard}$ which itself varies with tyre fluid temperature as may be seen from the $P_{Placard}$ isochore shown in Figure 2. $P_{Placard}$ is usually defined with respect to a normal vehicle load. For example, the warning threshold 30 may be set at a first fixed amount $D_{Warn}$, e.g. 0.3 Bar, below $P_{Placard}$ at any given temperature, while the alarm threshold 32 may be set at a second fixed amount $D_{Alarm}$, e.g. 0.4 or 0.5 Bar, below $P_{Placard}$ at any given temperature.

By way of example, at the nominal, or placard, tyre pressure $P_{Placard}$ at the reference temperature Tref, a pressure drop of $D_{warn}$ or $D_{Alarm}$ may occur before the warning alarm thresholds 30, 32 are met respectively. When one or other of pressure thresholds 30, 32 are met, the control unit 18 sends a warning or alarm signal, as appropriate, to the display unit 20. In this connection, Figure 2 also shows the actual pressure levels Low_TC_Warn and Low_TC_Alarm which represent the thresholds 30, 32 respectively at the reference temperature $T_{Ref}$.

If the vehicle is required to carry or tow a relatively heavy load, it is usually recommended to increase the tyre pressure of at least some of the wheels above the nominal level $P_{Placard}$. In Figure 2, the increased tyre pressure is indicated as $P_{Fill}$. $P_{Fill}$ varies with temperature as shown by the $P_{Fill}$ isochore. It would normally be desired to issue a warning signal or alarm signal when the actual, or measured, tyre pressure drops below the increased fill pressure $P_{Fill}$ by an amount $D_{Warn}$ or $D_{Alarm}$ respectively. However, because the thresholds 30, 32 are normally set with respect to $P_{Placard}$, the measured tyre pressure has to fall by an amount greater than Dwam or $D_{Alarm}$ before the respective alarms are generated.

It is therefore proposed to adjust the, or each, pressure threshold in response to deliberate adjustments of tyre pressure. In so doing, it is considered to be important to differentiate between deliberate tyre pressure adjustments and changes in tyre pressure which occur naturally, e.g. by means of a leak.

In one embodiment, the or each pressure threshold is adjusted according to the following rules:

**Rule 1**: IF

$$Current\ P_{Fill} > P{Placard}\ AND\ Last\ Measured\ P_{Fill}$$

THEN

$$Pressure\ Threshold = Current\ P_{Fill} - Max\ Allowed\ Leakage$$

**Rule 2**: IF

$$P{Placard} < Current\ P_{Fill}\ AND < Last\ Measured\ P_{Fill}$$

AND IF

$$P_{Fill}\ has\ changed\ by\ an\ amount\ D{Deflation}$$

THEN

$$Pressure\ Threshold = Current\ P_{Fill} - Max\ Allowed\ Leakage$$

**Rule 3**: IF

$$Current\ P_{Fill} \leq P{Placard}$$

THEN

$$Pressure\ Threshold = P{Placard} - Max\ Allowed\ Leakage$$

Where *Current $P_{Fill}$* is the current actual, or measured, pressure of a given tyre; *Last Measured $P_{Fill}$* is the previous measured pressure of said tyre; *Pressure Threshold* may be any applicable pressure threshold, e.g. the warning threshold 30 or alarm threshold 32; $P_{Placard}$ is the nominal, or placard, pressure for normal loads at the relevant tyre temperature; *Max Allowed Leakage* is the drop in tyre pressure relative to $P_{Placard}$ (or other nominal pressure) that is desired to cause a warning/alarm signal to be generated (e.g. $D_{Warn}$ or $D_{Alarm}$); and $D_{Deflation}$ is a pressure difference or drop that is deemed to constitute a deliberate deflation of a tyre rather than a natural leakage.

Under Rule 1, a pressure threshold, e.g. the threshold 30 or 32, is set to the current measured tyre pressure less an amount, e.g. $D_{Warn}$ or $D_{Alarm}$, corresponding to the pressure drop that is allowed before a warning/alarm signal is generated, provided that the current measured tyre pressure exceeds the placard tyre pressure $P_{Placard}$ for normal loads, and that the current measured tyre pressure also exceeds the previous measured tyre pressure, i.e. the measured tyre pressure has increased.

Under Rule 2, the pressure threshold, e.g. the threshold 30 or 32, is set to the current measured tyre pressure less an amount, e.g. $D_{Warn}$ or $D_{Alarm}$, corresponding to the pressure drop that is allowed before a warning/alarm signal is generated, provided that the current measured tyre pressure exceeds the placard tyre pressure $P_{Placard}$ for normal loads, and that the current measured tyre pressure is less than the previous measured tyre pressure, i.e. the measured tyre pressure has decreased, and that the amount of the decrease in tyre pressure is at least equal to the amount $D_{Deflation}$. This ensures that the pressure threshold is not decreased, while still above the placard pressure, in response to relatively small decreases in tyre pressure (which may be the result of leaks) but only in response to decreases in measured tyre pressure that are deemed to be the result of deliberate deflation of the tyre. The amount of $D_{Deflation}$ may be varied to suit the vehicle and/or its environmental conditions but may, for example, be approximately 0.2 Bar.

Under Rule 3, when the measured pressure value is less than or equal to the nominal or placard tyre pressure for a normal load $P_{Placard}$, the pressure threshold, e.g. the threshold 30 or 32, is set to $P_{Placard}$ less an amount, e.g. $D_{Warn}$ or $D_{Alarm}$, corresponding to the pressure drop that is allowed before a warning/alarm signal is generated.

Since the pressure drop $D_{Deflation}$ is deemed to be indicative of a deliberate decrease in tyre pressure, it should occur within an evaluation period that is commensurate with, or associated with, a deliberate decrease in tyre pressure in order to constitute a valid deflation event. For example, the evaluation period may comprise a time interval that may, for example be between approximately 1 and 30 seconds. Conveniently, the evaluation period may be determined as one or more sampling periods of the pressure sensors 12, i.e. the interval at which the sensors 12 take a pressure measurement. Typically, the sampling period is approximately 10 seconds, although it may be shorter or longer, e.g. between 1 and 30 seconds. Hence, the or each pressure threshold value may be decreased in response to determining that said current measured tyre pressure has decreased by more than $D_{Deflation}$ between two, successive or otherwise, pressure measurements taken by one or more of the pressure sensors 12.

In preferred embodiments, the evaluation period comprises a period for which the system determines that the vehicle is stationary. This is based on an assumption that the driver can only deliberately deflate a tyre when the vehicle is stationary. To exclude stationary periods that may occur, say, when stopped at traffic lights, the system may be arranged to determined that a valid evaluation period occurs if the vehicle is stopped for more than a predetermined time period, e.g. 5 minutes. Alternatively, or in addition, the system may be arranged to determined that a valid evaluation period occurs if the vehicle's ignition system is determined to be off. For example, the system may be arranged to decrease said at least one pressure threshold value in response to determining that said current measured tyre pressure has decreased by more than said predetermined amount between a first pressure measurement taken before or during a period in respect of which the system determines that the vehicle is stationary, and a second pressure measurement taken during or after said period in respect of which the system determines that the vehicle is stationary. Typically, the system 10, or at least the receiver 14, shuts down or transfers to a sleep mode when the vehicle is stationary in which case said first pressure measurement is typically taken before the vehicle is determined to be stationary and said second pressure measurement is taken after the stationary period is over, i.e. when the system/receiver has reactivated.

Referring again to Figure 2, adapted warning and alarm pressure thresholds 30', 32' are shown for the increased tyre pressure $P_{Fill}$ and it will be seen that the difference between the $P_{Fill}$ isochore and the adapted thresholds 30', 32' is maintained at the desired levels $D_{Warn}$ and $D_{Alarm}$ respectively. At the reference temperature $T_{Ref}$, the pressure levels which represent the thresholds 30', 32' are shown as Adapted_Low_TC_Warn and Adapted_Low_TC_Alarm respectively.

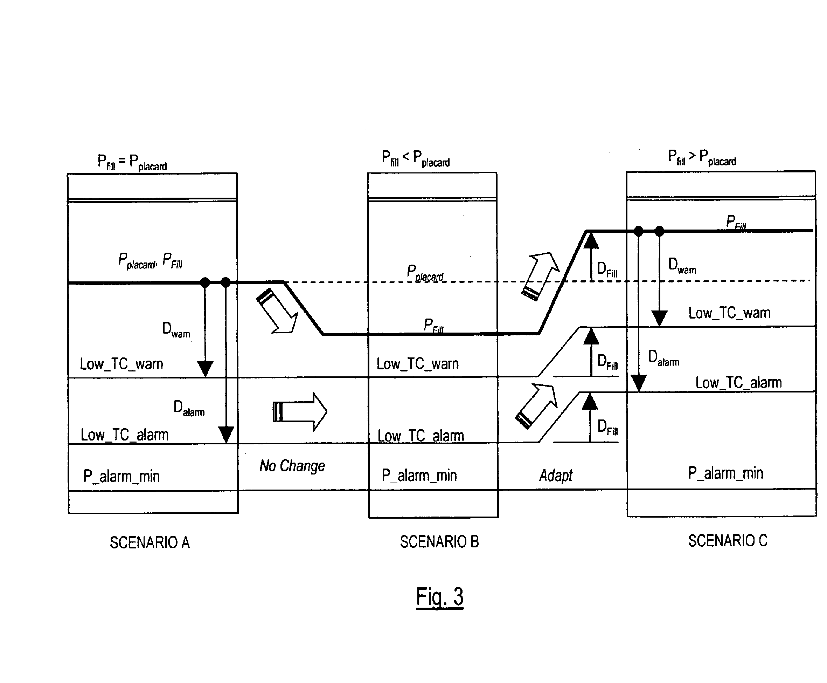

Figure 3 illustrates three scenarios A, B and C for a given operating temperature. In scenario A, the current fill pressure $P_{Fill}$ is equal to the placard pressure $P_{Placard}$ and the pressure threshold levels Low_TC_Warn and Low_TC_Alarm are set to the respective desired amount $D_{Warn}$ and $D_{Alarm}$ below $P_{Placard}$. In scenario B, the current fill pressure $P_{Fill}$ is less than the placard pressure $P_{Placard}$ and so, in accordance with Rule 3, the pressure threshold levels Low_TC_Warn and Low_TC_Alarm are unchanged. In scenario C, the current fill pressure $P_{Fill}$ has increased and is greater than the placard pressure $P_{Placard}$ by an amount $D_{Fill}$. In accordance with Rule 1, the pressure threshold levels Low_TC_Warn and Low_TC_Alarm are increased by an amount corresponding to $D_{Fill}$ in order to maintain the respective desired pressure differentials $D_{Warn}$ and $D_{Alarm}$ between the fill pressure and the warning/alarm thresholds.

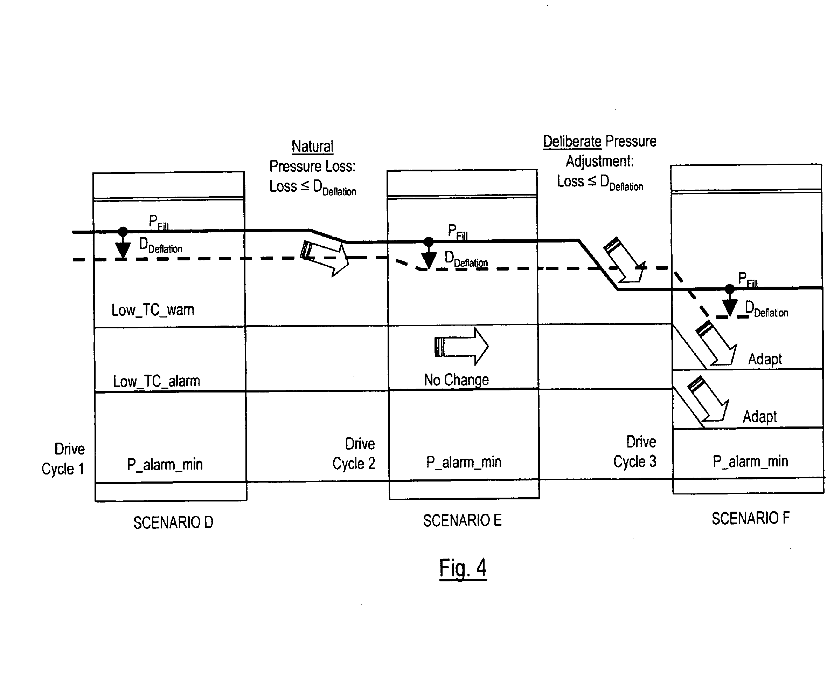

Figure 4 illustrates three further scenarios D, E and F for a given operating temperature. In scenario D, the current fill pressure $P_{Fill}$ is assumed to be greater than the placard pressure $P_{Placard}$. A deflation pressure level $P_{Deflated}$ is shown as a broken line at an amount $D_{Deflation}$ lower than $P_{Fill}$. The pressure threshold levels Low_TC_Warn and Low_TC_Alarm are maintained at a respective amount $D_{Warn}$ and $D_{Alarm}$ below $P_{Fill}$. In transition from scenario D to scenario E, it is assumed that there is a drop in current fill pressure by an amount less than $D_{Deflation}$. In accordance with Rule 2, the pressure threshold levels Low_TC_Warn and Low_TC_Alarm are not adapted with respect to scenario D (i.e. it is assumed that the decrease in pressure is not the result of a deliberate deflation). In transition from scenario E to scenario F, it is assumed that there is a drop in current fill pressure by an amount greater than $D_{Deflation}$. In accordance with Rule 2, the pressure threshold levels Low_TC_Warn and Low_TC_Alarm are adapted (decreased) with respect to scenario E to maintain the respective differentials $D_{Warn}$ and $D_{Alarm}$ with the current $P_{Fill}$ (i.e. it is assumed that the decrease in pressure is the result of a deliberate deflation). It is noted that through each scenario A to F, an absolute minimum pressure alarm threshold P_alarm_min is maintained and is not adapted in response to changes in fill pressure. Hence, by applying Rules 1 to 3, the TPMS 10, and more particularly the control unit 18, is able to adapt the pressure thresholds up or down, while differentiating between pressure changes that result from a deliberate deflation rather than a natural leak. This allows the TMPS 10 to maintain the desired sensitivity when issuing warning/alarm signals.

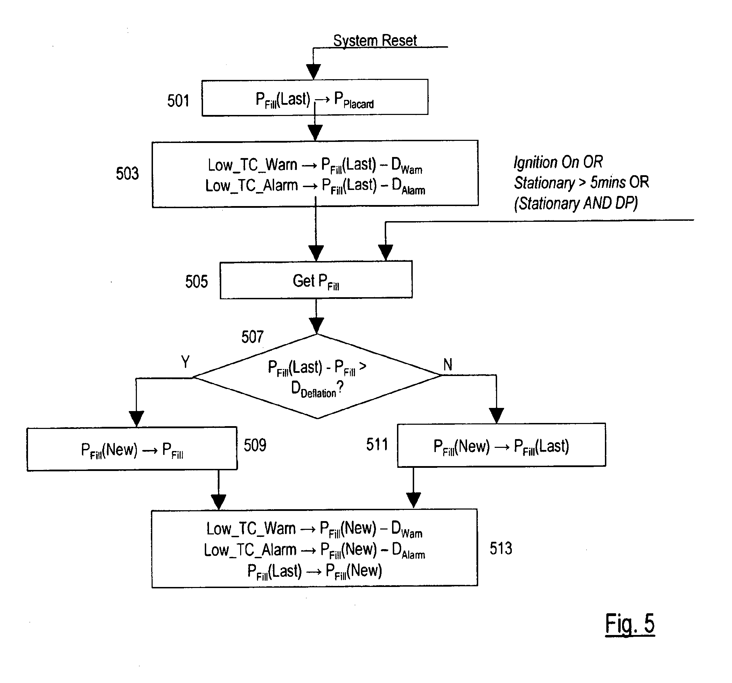

Figure 5 depicts a flowchart illustrating an example of how the control unit 18 may be programmed to implement Rules 1 to 3. Starting with a system reset, at module 501 a variable $P_{Fill}$(last), which represents the previous measured pressure level, is set equal to $P_{Placard}$. At module 503, the pressure thresholds Low_TC_Warn and Low_TC_Alarm are initialised to the value of $P_{Fill}$(last) less the respective differentials $D_{Warn}$ and $D_{Alarm}$. At module 505, the current tyre pressure level $P_{Fill}$ is obtained. Then, the difference between $P_{Fill}$ and $P_{Fill}$(last) is compared against $D_{Deflation}$ (module 507). If this comparison indicates that $P_{Fill}$ is less than $P_{Fill}$(last) by an amount greater than (or alternatively greater than or equal to) $D_{Deflation}$, then a variable $P_{Fill}$(new) is set equal to $P_{Fill}$ (module 509), otherwise $P_{Fill}$(new) is set equal to $P_{Fill}$(last) (module 511). At module 513, the pressure thresholds Low_TC_Warn and Low_TC_Alarm are set to the value of $P_{Fill}$(new) less the respective differentials $D_{Warn}$ and $D_{Alarm}$, and $P_{Fill}$(last) is set to the value of $P_{Fill}$(new). Although not illustrated in Figure 5, control may flow from module 513 to module 505 so that the thresholds can be further adapted, if appropriate, without having to reset the system.

As may be seen from the input condition associated with module 505 of Figure 5, the times at which the adaptation process is performed may vary from embodiment to embodiment. For example, in one embodiment, the adaptation process may be performed as long as the vehicle's ignition is on and/or as long as the vehicle is moving. Alternatively, or in addition, the adaptation process is performed only when the vehicle is deemed to be stationary, or to have been stationary for a period (e.g. 5 minutes) long enough to have enabled the driver to inflate or deflate a tyre. Determining whether or not the vehicle is stationary can be performed in any convenient manner, e.g. by the state of the ignition and/or the state of a roll switch or other motion or vibration detector and/or by detecting signal components in the pressure signal that are indicative of a rolling tyre, and/or speed information from the vehicle's systems. To this end, the system 10 may include (typically as part of the wheel mounted unit) or be cooperable with any suitable means for determining whether or not the vehicle is stationary.

By adjusting the pressure thresholds only when the vehicle is stationary, the thresholds remain fixed while the vehicle is being driven ensuring that leaks in the tyre(s) do not cause an undesired drop in the thresholds for the duration of the drive. Alternatively, or in addition, the adaptation process is performed when a significant pressure change (for example over approximately 100 mBar, or over approximately 200 mBar) is detected since the last pressure sensor measurement. By way of example, this enables the system to identify a tyre inflation event caused by the driver. In Figure 5, this occurrence is represented by the acronym DP and is preferably used as a trigger event for the adaptation process whenever the vehicle is also stationary.

In preferred embodiments, the methods described herein are based on temperature compensated pressure values, e.g. $P_{Fill}$ and $P_{Placard}$, and temperature compensated pressure thresholds, e.g. warning and alarm thresholds 30, 30', 32, 32'. This can, for example, be seen from Figure 2 in which the aforesaid values vary with tyre temperature. It will be understood, however, that the invention may alternatively, or additionally, be applied to uncompensated, or raw, pressure values and pressure thresholds.

When performing temperature compensation in tyre pressure monitoring, the control unit 18 adjusts the measured, or raw, pressure value received from each sensor unit 12 depending on a reference temperature and on the respective tyre temperature value received from the respective sensor unit 12. Equation 1, which is based on Boyle's law, gives a suitable algorithm for performing temperature compensation:

$$P_{TC} = \left[ \frac{(P_{meas} + 1.01) \times (T_{ref} + 273.15)}{(T_{meas} + 273.15)} \right] - 1.01 \qquad [1]$$

Where $P_{TC}$ is the temperature compensated pressure value, $P_{meas}$ is the measured tyre pressure value, $T_{meas}$ is the measured tyre temperature value and $T_{ref}$ is the reference temperature. Pressure thresholds may be temperature compensated in the same way. By using temperature compensated pressure values, the sensitivity of the warning/alarm system is maintained at a desired level and is not unduly influenced by changes in tyre temperature.

The methods described herein may be applied to at least one wheel of a multi-wheeled vehicle. The pressure threshold(s) determined for the tyre of one wheel may be used in respect of other wheels. In particular, the pressure threshold(s) determined for one wheel of an axle may be used in respect of the or each other wheel of the axle. Should it be determined that the tyre pressure of one wheel on an axle is higher than the tyre pressure of the other wheel(s), then it is preferred to calculate pressure threshold(s) from the wheel having the highest tyre pressure.

It will be seen from the foregoing that the methods and apparatus described herein allow pressure thresholds to be adapted in response to deliberate changes in tyre pressure and so to maintain a desired sensitivity. In particular, the methods and apparatus enable differentiation between a deliberate deflation and a natural leakage and cause thresholds to be adapted in response to the former and not the latter.

**Claims**

1. A system (10) for monitoring the pressure of at least one tyre of a wheeled vehicle, the system comprising a pressure sensor (12) for measuring the tyre pressure, means (18) for determining if a current measured tyre pressure ($P_{Fill}$) exceeds a nominal threshold value ($P_{Placard}$), and means for measuring changes in said current measured tyre pressure, **characterized in that** the system is arranged to maintain at least one pressure threshold value (30, 32) and to selectively adjust said at least one pressure threshold value relative to said current measured tyre pressure when the system determines that said current measured tyre pressure exceeds said nominal value, wherein the system is arranged to decrease said at least one pressure threshold value in response to determining that said current measured tyre pressure has decreased by more than a predetermined amount ($D_{Warn}$, $D_{Alarm}$) within an evaluation period.

2. A system as claimed in claim 1, wherein said evaluation period comprises a period in respect of which the system determines that the vehicle is stationary.

3. A system as claimed in claim 1 or 2, wherein the system (10) may be arranged to decrease said at least one pressure threshold value (30, 32) in response to determining that said current measured tyre pressure ($P_{Fill}$) has decreased by more than said predetermined amount ($D_{Warn}$, $D_{Alarm}$) between a first pressure measurement taken before or during a period in respect of which the system determines that the vehicle is stationary, and a second pressure measurement taken during or after said period in respect of which the system determines that the vehicle is stationary.

4. A system as claimed in any preceding claim, wherein the system (10) is arranged to maintain said at least one pressure threshold value (30, 32) unadjusted in response to determining that said current measured tyre pressure ($P_{Fill}$) exceeds said nominal value ($P_{Placard}$) and has decreased by less than said predetermined amount within said evaluation period, and preferably wherein said at least one pressure threshold value is maintained at a value relative to a previous measured tyre pressure.

5. A system as claimed in any preceding claim, wherein the system is arranged to increase said at least one pressure threshold value (30, 32) in response to determining that said current measured tyre pressure value ($P_{Fill}$) has increased.

6. A system as claimed in any preceding claim, wherein said system is arranged to set said at least one pressure threshold value (30, 32) relative to said nominal value ($P_{Placard}$) upon determining that said current tyre pressure ($P_{Fill}$) is less than or equal to said nominal value.

7. A system as claimed in any preceding claim, the system being arranged to increase or decrease, as appropriate, said at least one pressure threshold value (30, 32) in order to maintain a substantially constant differential level between said at least one pressure threshold value and said current measured tyre pressure ($P_{Fill}$), and wherein, preferably, the system is arranged to maintain a plurality of pressure threshold values, and to maintain a respective substantially constant differential level for each pressure threshold value.

8. A system as claimed in any preceding claim, wherein the system includes means (18) for determining if said vehicle is stationary, the system being arranged to adjust said at least one pressure threshold value (30, 32) in response to determining that said current measured tyre pressure ($P_{Fill}$) has decreased by more than a predetermined amount ($D_{Warn}$, $D_{Alarm}$) during a period when said vehicle is determined to be stationary, and wherein, preferably, said system is arranged to adjust said at least one pressure threshold value in response to determining that said current measured tyre pressure has decreased by more than a predetermined amount during a period when said vehicle is determined to have been stationary for longer than a threshold period.

9. A system as claimed in any preceding claim, wherein said system includes means (18) for determining the state of said vehicle's ignition system, the system being arranged to adjust said at least one pressure threshold value (30, 32) when said vehicle's ignition is determined to be on.

10. A system as claimed in any preceding claim, wherein said system includes means (18) for determining the state of said vehicle's ignition system, the system being arranged to adjust said at least one pressure threshold value (30, 32) in response to determining that said current measured tyre pressure ($P_{Fill}$) has decreased by more than a predetermined amount ($D_{Warn}$, $D_{Alarm}$) during a period when said vehicle's ignition is determined to be off.

11. A system as claimed in any preceding claim, wherein the system (10) is arranged to perform temperature compensation of tyre pressure measurements and wherein, preferably, the system is arranged to perform said temperature compensation with respect to a reference temperature and based on Boyle's law.

12. A system as claimed in any preceding claim, wherein said predetermined amount is between approximately 0.1 and 0.3 bar, preferably approximately 0.2 bar.

13. A system as claimed in any preceding claim, wherein said pressure sensor (12) is arranged to measure tyre pressure in each of a plurality of successive instances of a sampling period, said evaluation period being determined by the length of one or more successive instances of said sampling period.

14. An apparatus for adjusting at least one pressure threshold (30, 32) in a tyre pressure monitoring system (10), the apparatus comprising means (18) for determining if a current measured tyre pressure ($P_{Fill}$) exceeds a nominal threshold value ($P_{Placard}$), and means for measuring changes in said current measured tyre pressure, **characterized in that** the apparatus is arranged to maintain at least one pressure threshold value (30, 32) and to selectively adjust said at least one pressure threshold value relative to said current measured tyre pressure value when the apparatus determines that said current measured tyre pressure value exceeds said nominal value, wherein the apparatus is arranged to decrease said at least one pressure threshold value in response to determining that said current measured tyre pressure has decreased by more than a predetermined amount ($D_{Warn}$, $D_{Alarm}$) within an evaluation period.

15. A method of adjusting at least one pressure threshold in a tyre pressure monitoring system, the method comprising maintaining at least one tyre pressure threshold value (30, 32); selectively adjusting said at least one pressure threshold value relative to a current measured tyre pressure value ($P_{Fill}$) when said current measured tyre pressure value exceeds a nominal value ($P_{Placard}$); and decreasing said at least one pressure threshold value in response to a decrease in said current measured tyre pressure value which exceeds a predetermined amount ($D_{Warn}$, $D_{Alarm}$) within an evaluation period

**Patentansprüche**

1. System (10) zum Überwachen des Drucks von wenigstens einem Reifen eines Räderfahrzeugs, wobei das System einen Drucksensor (12) zum Messen des Reifendrucks, ein Mittel (18) zum Bestimmen, ob ein aktueller gemessener Reifendruck ($P_{Fill}$) einen Nennschwellenwert ($P_{Placard}$) übersteigt, und ein Mittel zum Messen von Veränderungen des aktuellen gemessenen Reifendrucks, **dadurch gekennzeichnet, dass** das System dazu ausgebildet ist, wenigstens einen Druckschwellenwert (30, 32) beizubehalten und selektiv den wenigstens einen Druckschwellenwert relativ zum aktuellen gemessenen Reifendruck anzupassen, wenn das System bestimmt, dass der aktuelle gemessene Reifendruck den Nennwert übersteigt, wobei das System dazu ausgebildet ist, den wenigstens einen Druckschwellenwert in Reaktion darauf zu senken, dass bestimmt wird, dass der aktuelle gemessene Reifendruck innerhalb eines Bewertungszeitraums um mehr als eine vorgegebene Größe ($D_{Warn}$, $D_{Alarm}$) abgenommen hat.

2. System nach Anspruch 1, wobei der Bewertungszeitraum einen Zeitraum, in Bezug auf den das System bestimmt, dass das Fahrzeug stationär ist, umfasst.

3. System nach Anspruch 1 oder 2, wobei das System (10) dazu ausgebildet sein kann, wenigstens einen Druckschwellenwert (30, 32) in Reaktion darauf zu senken, dass bestimmt wird, dass der aktuelle gemessene Reifendruck ($P_{Fill}$) zwischen einer ersten Druckmessung, die vor oder während eines Zeitraums durchgeführt wird, in Bezug auf den das System bestimmt, dass das Fahrzeug stationär ist, und einer zweiten Druckmessung, die während oder nach dem Zeitraum durchgeführt wird, in Bezug auf den das System bestimmt, dass das Fahrzeug stationär ist, um mehr als die vorgegebene Größe ($D_{Warn}$, $D_{Alarm}$) abgenommen hat.

4. System nach einem der vorhergehenden Ansprüche, wobei das System (10) dazu ausgebildet ist, den wenigstens einen Druckschwellenwert (30, 32) in Reaktion darauf unangepasst zu lassen, dass bestimmt wird, dass der aktuelle gemessene Reifendruck ($P_{Fill}$) den Nennwert ($P_{Placard}$) übersteigt und innerhalb des Bewertungszeitraums um weniger als die vorgegebene Größe abgenommen hat, und wobei vorzugsweise der wenigstens eine Druckschwellenwert auf einem Wert relativ zu einem zuvor gemessenen Reifendruck gehalten wird.

5. System nach einem der vorhergehenden Ansprüche, wobei das System dazu ausgebildet ist, den wenigstens einen Druckschwellenwert (30, 32) in Reaktion darauf zu erhöhen, dass bestimmt wird, dass der aktuelle gemessene Reifendruck ($P_{Fill}$) zugenommen hat.

6. System nach einem der vorhergehenden Ansprüche, wobei das System dazu ausgebildet ist, den wenigstens einen Druckschwellenwert (30, 32) relativ zu dem Nennwert ($P_{Placard}$) einzustellen, wenn bestimmt wird, dass der aktuelle gemessene Reifendruck ($P_{Fill}$) kleiner oder gleich dem Nennwert ist.

7. System nach einem der vorhergehenden Ansprüche, wobei das System dazu ausgebildet ist, je nach Bedarf den wenigstens einen Druckschwellenwert (30, 32) zu erhöhen oder zu senken, um eine im Wesentlichen konstante Differenz zwischen dem wenigstens einen Druckschwellenwert und dem aktuellen gemessenen Reifendruck ($P_{Fill}$) beizubehalten, und wobei das System vorzugsweise dazu ausgebildet ist, eine Vielzahl von Druckschwellenwerten beizubehalten und eine jeweilige im Wesentlichen konstante Differenz für jeden Druckschwellenwert beizubehalten.

8. System nach einem der vorhergehenden Ansprüche, wobei das System ein Mittel (18) zum Bestimmen aufweist, ob das Fahrzeug stationär ist, wobei das System dazu ausgebildet ist, den wenigstens einen Druckschwellenwert (30, 32) in Reaktion darauf anzupassen, dass bestimmt wird, dass der aktuelle gemessene Reifendruck ($P_{Fill}$) während eines Zeitraums, für den bestimmt wird, dass das Fahrzeug stationär ist, um mehr als eine vorgegebene Größe ($D_{Warn}$, $D_{Alarm}$) abgenommen hat, und wobei das System vorzugsweise dazu ausgebildet ist, den wenigstens einen Druckschwellenwert in Reaktion darauf anzupassen, dass bestimmt wird, dass der aktuelle gemessene Reifendruck während eines Zeitraums, für den bestimmt wird, dass das Fahrzeug länger als für einen Schwellenwertzeitraum stationär war, um mehr als eine vorgegebene Größe abgenommen hat.

9. System nach einem der vorhergehenden Ansprüche, wobei das System ein Mittel (18) zum Bestimmen des Zustands des Zündsystems des Fahrzeugs aufweist, wobei das System dazu ausgebildet ist, den wenigstens einen Druckschwellenwert (30, 32) anzupassen, wenn bestimmt wird, dass die Zündung des Fahrzeugs eingeschaltet ist.

10. System nach einem der vorhergehenden Ansprüche, wobei das System ein Mittel (18) zum Bestimmen des Zustands des Zündsystems des Fahrzeugs aufweist, wobei das System dazu ausgebildet ist, den wenigstens einen Druckschwellenwert (30, 32) in Reaktion darauf anzupassen, dass bestimmt wird, dass der aktuelle gemessene Reifendruck ($P_{Fill}$) während eines Zeitraums, für den bestimmt wird, dass die Zündung des Fahrzeugs ausgeschaltet ist, um mehr als eine vorgegebene Größe ($D_{Warn}$, $D_{Alarm}$) abgenommen hat.

11. System nach einem der vorhergehenden Ansprüche, wobei das System (10) dazu ausgebildet ist, eine Temperaturkompensation von Reifendruckmessungen durchzuführen und wobei das System vorzugsweise dazu ausgebildet ist, die Temperaturkompensation in Bezug auf eine Referenztemperatur und auf Grundlage des Boyleschen Gesetzes durchzuführen.

12. System nach einem der vorhergehenden Ansprüche, wobei die vorgegebene Größe zwischen etwa 0,1 und 0,3 bar liegt, vorzugsweise bei etwa 0,2 bar.

13. System nach einem der vorhergehenden Ansprüche, wobei der Drucksensor (12) dazu ausgebildet ist, den Reifendruck an jedem einer Vielzahl aufeinanderfolgender Zeitpunkte eines Abtastungszeitraums zu messen, wobei der Bewertungszeitraum durch die Länge von einem oder mehreren aufeinanderfolgenden Zeitpunkten des Abtastungszeitraums bestimmt wird.

**14.** Vorrichtung zum Anpassen von wenigstens einem Druckschwellenwert (30, 32) in einem Reifendrucküberwachungssystem (10), wobei die Vorrichtung ein Mittel (18) zum Bestimmen, ob ein aktueller gemessener Reifendruck ($P_{Fill}$) einen Nennschwellenwert ($P_{Placard}$) übersteigt, und ein Mittel zum Messen von Veränderungen des aktuellen gemessenen Reifendrucks umfasst, **dadurch gekennzeichnet, dass** die Vorrichtung dazu ausgebildet ist, wenigstens einen Druckschwellenwert (30, 32) beizubehalten und selektiv den wenigstens einen Druckschwellenwert relativ zum aktuellen gemessenen Reifendruck anzupassen, wenn die Vorrichtung bestimmt, dass der aktuelle gemessene Reifendruck den Nennwert übersteigt, wobei die Vorrichtung dazu ausgebildet ist, den wenigstens einen Druckschwellenwert in Reaktion darauf zu senken, dass bestimmt wird, dass der aktuelle gemessene Reifendruck innerhalb eines Bewertungszeitraums um mehr als eine vorgegebene Größe ($D_{Warn}$, $D_{Alarm}$) abgenommen hat.

**15.** Verfahren zum Anpassen von wenigstens einem Druckschwellenwert in einem Reifendrucküberwachungssystem, wobei das Verfahren umfasst: Beibehalten von wenigstens einem Reifendruckschwellenwert (30, 32); selektives Anpassen des wenigstens einen Druckschwellenwerts relativ zu einem aktuellen gemessenen Reifendruck ($P_{Fill}$), wenn der aktuelle gemessene Reifendruck einen Nennschwellenwert ($P_{Placard}$) übersteigt; und Senken des wenigstens einen Druckschwellenwerts in Reaktion auf eine Abnahme des aktuellen gemessenen Reifendruckwerts, die eine vorgegebene Größe ($D_{Warn}$, $D_{Alarm}$) übersteigt, innerhalb eines Bewertungszeitraums.

**Revendications**

**1.** Système (10) de surveillance de la pression d'au moins un pneu d'un véhicule à roues, le système comprenant un capteur de pression (12) pour mesurer la pression du pneu, un moyen (18) pour déterminer si une pression actuelle mesurée du pneu ($P_{Fill}$) est supérieure à une valeur seuil nominale ($P_{Placard}$), et un moyen pour mesurer les changements dans ladite pression actuelle mesurée du pneu, **caractérisée en ce que** le système est configuré pour maintenir au moins une valeur seuil de pression (30, 32) et pour ajuster sélectivement ladite au moins une valeur seuil de pression par rapport à ladite pression actuelle mesurée du pneu lorsque le système détermine que ladite actuelle pression mesurée du pneu est supérieure à ladite valeur nominale, le système étant configuré pour diminuer ladite au moins une valeur seuil de pression en réponse à la détermination que ladite pression actuelle mesurée du pneu a diminuée d'une quantité supérieure à une quantité prédéterminée ($D_{Warn}$, $D_{Alarm}$) dans une période d'évaluation.

**2.** Système selon la revendication 1, dans lequel ladite période d'évaluation comprend une période en regard de laquelle le système détermine que le véhicule est à l'arrêt.

**3.** Système selon les revendications 1 ou 2, dans lequel le système (10) peut être configuré pour diminuer ladite au moins une valeur seuil de pression (30, 32) en réponse à la détermination que ladite pression actuelle mesurée du pneu ($P_{Fill}$) a diminué d'une quantité supérieure à une quantité prédéterminée ($D_{Warn}$, $D_{Alarm}$) entre une première mesure de pression prise avant ou pendant une période pendant laquelle le système détermine que le véhicule est à l'arrêt, et une deuxième mesure de pression prise pendant ou après ladite période pendant laquelle le système détermine que le véhicule est à l'arrêt.

**4.** Système selon l'une quelconque des revendications précédentes, dans lequel le système (10) est configuré pour maintenir ladite au moins une valeur seuil de pression (30, 32) non-ajustée en réponse à la détermination que ladite pression actuelle mesurée du pneu ($P_{Fill}$) est supérieure à ladite valeur nominale ($P_{Placard}$) et a diminué par une valeur inférieure à ladite valeur prédéterminée pendant ladite période d'évaluation, et de préférence dans lequel ladite au moins une valeur seuil de pression est maintenue à une valeur relative à une précédente pression mesurée du pneu.

**5.** Système selon l'une quelconque des revendications précédentes, dans lequel le système est configuré pour augmenter ladite au moins une valeur seuil de pression (30, 32) en réponse à la détermination que ladite valeur de la pression actuelle mesurée du pneu ($P_{Fill}$) a augmenté.

**6.** Système selon l'une quelconque des revendications précédentes, dans lequel ledit système est configuré pour régler ladite au moins une valeur seuil de pression (30, 32) par rapport à ladite valeur nominale ($P_{Placard}$) lorsqu'il est déterminé que ladite valeur de pression actuelle mesurée du pneu ($P_{Fill}$) est inférieure ou égale à ladite valeur nominale.

**7.** Système selon l'une quelconque des revendications précédentes, le système étant configuré pour augmenter ou diminuer, selon le cas, ladite au moins une valeur seuil de pression (30, 32) afin de maintenir un niveau différentiel sensiblement constant entre ladite au moins une valeur seuil de pression et ladite valeur de pression actuelle mesurée du pneu ($P_{Fill}$), et dans lequel, de préférence, le système est configuré pour maintenir une pluralité de valeurs seuil de pression, et pour maintenir un niveau différentiel sensiblement constant respectif pour chaque valeur seuil de pression.

8. Système selon l'une quelconque des revendications précédentes, dans lequel le système comprend un moyen (18) pour déterminer si ledit véhicule est à l'arrêt, le système étant configuré pour ajuster ladite au moins une valeur seuil de pression (30, 32) en réponse à la détermination que ladite valeur de pression actuelle mesurée du pneu ($P_{Fill}$) a diminué d'une quantité supérieure à une quantité prédéterminée ($D_{Warn}$, $D_{Alarm}$) pendant une période pendant laquelle il a été déterminé que ledit véhicule est resté à l'arrêt, et dans lequel, de préférence, ledit système est configuré pour ajuster ladite au moins une valeur seuil de pression en réponse à la détermination que ladite pression actuelle mesurée du pneu a diminué d'une quantité supérieure à une quantité prédéterminée pendant une période pendant laquelle il a été déterminé que ledit véhicule est resté à l'arrêt pendant plus longtemps qu'une période seuil.

9. Système selon l'une quelconque des revendications précédentes, dans lequel ledit système comprend un moyen (18) pour déterminer l'état du système d'allumage dudit véhicule, le système étant configuré pour régler ladite au moins une valeur seuil de pression (30, 32) lorsque ledit allumage du véhicule est déterminé comme étant en marche.

10. Système selon l'une quelconque des revendications précédentes, dans lequel ledit système comprend un moyen (18) pour déterminer l'état dudit système d'allumage du véhicule, le système étant configuré pour régler ladite au moins une valeur seuil de pression (30, 32) en réponse à la détermination que ladite pression actuelle mesurée du pneu ($P_{Fill}$) a diminuée d'une quantité supérieure à une quantité prédéterminée ($D_{Warn}$, $D_{Alarm}$) pendant une période dans laquelle ledit allumage du véhicule est déterminé comme étant éteint.

11. Système selon l'une quelconque des revendications précédentes, dans lequel le système (10) est configuré de manière à effectuer une compensation de température des mesures de pression des pneus et dans lequel, de préférence, le système est agencé pour effectuer ladite compensation de température par rapport à une température de référence et en se basant sur la loi de Boyle.

12. Système selon l'une quelconque des revendications précédentes, dans lequel ladite valeur prédéterminée est comprise entre environ 0,1 et 0,3 bar, de préférence d'environ 0,2 bar.

13. Système selon l'une quelconque des revendications précédentes, dans lequel ledit capteur de pression (12) est configuré pour mesurer la pression du pneu dans chacune d'une pluralité d'instances successives d'une période d'échantillonnage, ladite période d'évaluation étant déterminée par la durée d'une ou plusieurs instances successives de ladite période d'échantillonnage.

14. Appareil pour le réglage d'au moins un seuil de pression (30, 32) dans un système de surveillance de pression de pneu (10), le dispositif comprenant un moyen (18) pour déterminer si une pression actuelle mesurée du pneu ($P_{Fill}$) est supérieure à une valeur seuil nominale ($P_{Placard}$), et un moyen pour mesurer les changements dans ladite pression actuelle mesurée du pneu, **caractérisé en ce que** le dispositif est configuré pour maintenir au moins une valeur seuil de pression (30, 32) et pour ajuster de manière sélective ladite au moins une valeur de seuil de pression par rapport à ladite pression actuelle mesurée du pneu lorsque le dispositif détermine que ladite valeur actuelle de pression mesurée du pneu est supérieure à ladite valeur nominale, dans lequel l'appareil est configuré pour diminuer ladite au moins une valeur seuil de pression en réponse à la détermination que ladite pression actuelle mesurée du pneu a diminuée par une quantité supérieure à une quantité prédéterminée ($D_{Warn}$, $D_{Alarm}$) durant une période d'évaluation.

15. Procédé de réglage d'au moins un seuil de pression dans un système de surveillance de la pression de pneu, le procédé comprenant le maintien d'au moins une valeur seuil de pression du pneu (30, 32) ; l'ajustement sélectif de ladite au moins une valeur seuil de pression par rapport à une valeur actuelle de pression mesurée du pneu ($P_{Fill}$) lorsque ladite valeur actuelle de pression mesurée du pneu est supérieure à une valeur nominale ($P_{Placard}$) ; et la diminution de ladite au moins une valeur seuil de pression en réponse à une diminution de ladite valeur actuelle de pression mesurée du pneu qui est supérieure à une quantité prédéterminée ($D_{Warn}$, $D_{Alarm}$) dans une période d'évaluation.

Fig. 1

Fig. 2

Fig. 3

Fig. 4

System Reset

**501** $P_{Fill}(Last) \rightarrow P_{Placard}$

**503**
$Low\_TC\_Warn \rightarrow P_{Fill}(Last) - D_{Warn}$
$Low\_TC\_Alarm \rightarrow P_{Fill}(Last) - D_{Alarm}$

*Ignition On OR*
*Stationary > 5mins OR*
*(Stationary AND DP)*

**505** Get $P_{Fill}$

**507** $P_{Fill}(Last) - P_{Fill} > D_{Deflation}$?

Y

**509** $P_{Fill}(New) \rightarrow P_{Fill}$

N

**511** $P_{Fill}(New) \rightarrow P_{Fill}(Last)$

**513**
$Low\_TC\_Warn \rightarrow P_{Fill}(New) - D_{Warn}$
$Low\_TC\_Alarm \rightarrow P_{Fill}(New) - D_{Alarm}$
$P_{Fill}(Last) \rightarrow P_{Fill}(New)$

Fig. 5

16

**EP 2 142 390 B1**

**Patent documents cited in the description**

- DE 10360122
- EP 1767384 A
- FR 2884455